# FASCICULE DE BREVET EUROPEEN

(11) **EP 1 617 664 B1**
(45) Date de publication et mention de la délivrance du brevet: **20.05.2009**
(21) Numéro de dépôt: 05291519.6
(22) Date de dépôt: 13.07.2005
(51) Int. Cl.: H04N 7/10, H04L 12/28

(54) **Système de distribution de signaux de télévision et de signaux de réseau informatique local**
System zur Verteilung von Fernsehsignalen und von Signalen vom lokalen Netzwerk
System for distributing television signals and signals from local area network

(30) Priorité: 16.07.2004 FR 0407928
(43) Date de publication de la demande: 18.01.2006
(73) Titulaire: LEGRAND FRANCE, 87000 Limoges (FR); LEGRAND SNC, 87045 Limoges (FR)
(72) Inventeur: Laroche, Vincent, 38160 Saint-Marcellin (FR)
(74) Mandataire: Lepelletier-Beaufond, François

(56) Documents cités:
- WO-A-01/69925
- FR-A- 2 769 160
- FR-A- 2 830 156
- US-A1- 2002 174 423
- US-B1- 6 192 399

## Description

L'invention a trait aux installations de distribution de signaux dans un bâtiment résidentiel voire tertiaire.

On sait qu'il est intéressant de pouvoir distribuer les signaux de télévision sur une paire de conducteurs torsadée disponible dans un câble servant par ailleurs à la distribution des signaux de réseau informatique local (en anglais : Local Area Network).

Cependant, le cheminement des signaux de télévision dans une paire de conducteurs torsadée, appartenant au même câble qu'une paire de conducteurs torsadée véhiculant des signaux de réseau informatique local, a pour conséquence de perturber les signaux de télévision.

Parmi ces signaux, est plus particulièrement perturbée une éventuelle voie de retour, c'est-à-dire une plage de fréquences servant à effectuer des communications bidirectionnelles entre une tête de réseau de télévision et des modems pour de tels réseaux.

Il se trouve en effet que la bande de fréquences des signaux de réseau informatique local (en général de 1 à 150 MHz) recouvre la bande de fréquences utilisée pour la voie de retour (en général de 5 à 55 ou 65 MHz, avec parfois une bande complémentaire située entre 108 et 120 MHZ), alors que les caractéristiques d'isolation sont relativement modestes entre les paires de conducteurs susmentionnées dans un câble conventionnel de réseau informatique local, de sorte que du bruit est induit sur la paire de conducteurs véhiculant les signaux de télévision lorsque des échanges se produisent sur les paires de conducteurs véhiculant les signaux de réseau informatique local, lequel bruit se retrouve sur le réseau de télévision et gêne, voire empêche, les communications entre la tête de réseau et les modems.

L'invention vise à éviter de perturber ainsi un réseau de télévision.

L'invention propose à cet effet un système de distribution de signaux de télévision et de signaux de réseau informatique local, caractérisé en ce qu'il comporte :
- une première borne de connexion, adaptée à recevoir un câble de distribution de signaux de télévision ;
- plusieurs deuxièmes bornes de connexion, chacune adaptée à recevoir un câble de réseau informatique local ;
- une unité électronique active de traitement de signaux de télévision, reliée à ladite première borne de connexion et à chaque dite deuxième borne de connexion ;
- une unité électronique active de réseau informatique local, reliée à chaque dite deuxième borne de connexion et comportant, pour chaque dite deuxième borne de connexion, une borne de signalisation fournissant un signal logique qui est à un premier état en présence de signaux de réseau informatique local sur la deuxième borne concernée et à un deuxième état en l'absence de tels signaux ; et
- pour chaque dite deuxième borne, un gestionnaire de présence de signaux de réseau informatique local, comportant un organe de coupure disposé en série sur la liaison entre ladite unité électronique active de traitement de signaux de télévision et cette deuxième borne, admettant une position bloquée et une position passante ; et comportant un organe de pilotage dudit organe de coupure relié à la borne de signalisation concernée de ladite unité électronique active de réseau informatique local, ledit organe de pilotage faisant prendre audit organe de coupure ladite position passante sauf dans le cas où une condition prédéterminée est satisfaite, auquel cas l'organe de pilotage fait prendre à l'organe de coupure la position bloquée, ladite condition prédéterminée comportant le critère que ledit signal logique fourni par ladite borne de signalisation concernée de ladite unité électronique active de réseau informatique local soit dans ledit premier état.

Le gestionnaire de présence de signaux de réseau informatique local bloque donc la liaison entre l'unité active de traitement de signaux de télévision et la deuxième borne à laquelle est associé ce gestionnaire si à cette borne est connecté un câble de réseau informatique local au travers duquel l'unité électronique active de réseau informatique local échange des signaux avec un équipement informatique branché au bout de ce câble.

Le bruit induit sur la paire de conducteurs véhiculant les signaux de télévision par les paires de conducteurs véhiculant les signaux de réseau informatique local ne parvient pas à l'unité électronique active de traitement de signaux de télévision et n'est donc pas transmis par cette unité sur le réseau de télévision.

La mise en oeuvre des bornes de signalisation de l'unité électronique active de réseau informatique local est particulièrement simple et commode, le circuit intégré principal autour duquel est bâtie une telle unité étant généralement muni de bornes de sortie, destinées à des diodes électroluminescentes de visualisation, sur lesquelles est directement présent un signal logique à deux états représentant la présence ou l'absence de signaux de réseau informatique local sur la borne concernée.

Le fait de prévoir que l'organe de coupure de chaque gestionnaire de présence de signaux de réseau informatique local, soit normalement à l'état passant évite d'avoir à prendre des mesures particulières pour décider de mettre en service ou non la transmission des signaux de télévision.

A cet égard, on notera qu'on connaît déjà un système où une telle décision est prise lorsqu'est détectée la présence d'un cordon spécifique branché non seulement sur la paire de conducteurs torsadée servant à véhiculer les signaux de télévision, mais aussi sur une paire supplémentaire servant à opérer cette détection.

Dans un tel système, il n'est pas possible d'utiliser la paire supplémentaire à un autre usage, par exemple pour la téléphonie, tandis que l'utilisation d'un doubleur (accessoire fournissant deux prises de réseau informatique local branchées en parallèle de la prise dans laquelle est inséré cet accessoire) autorise le branchement simultané du cordon spécifique et d'un équipement informatique, de sorte que les mesures prises pour mettre ou non en service les signaux de télévision sont inefficaces pour éviter la présence simultanée de signaux de télévision et de signaux de réseau informatique local dans un même câble.

Dans un premier mode de réalisation préféré, comme étant particulièrement simple et commode à mettre en oeuvre, ladite condition prédéterminée est que ledit signal logique fourni par ladite borne de signalisation concernée de ladite unité électronique active de réseau informatique local soit dans ledit premier état.

Dans un mode de réalisation alternatif préféré, plus complexe à mettre en oeuvre mais offrant l'avantage de maintenir la disponibilité des signaux de télévision si l'unité électronique active de traitement des signaux de télévision n'est pas apte à prendre en charge une voie de retour, ladite unité électronique active de traitement de signaux de télévision comporte une borne de signalisation fournissant un signal logique qui est à un premier état si ladite unité active de traitement des signaux de télévision est apte à prendre en charge une voie de retour sur ledit câble de distribution de signaux de télévision et qui est sinon à un deuxième état ; et ledit organe de pilotage dudit organe de coupure est relié à ladite borne de signalisation de ladite unité électronique active de traitement de signaux de télévision, ladite condition prédéterminée étant que ledit signal logique fourni par la borne de signalisation de l'unité électronique active de traitement de signaux de télévision soit dans ledit premier état et que ledit signal logique fourni par la borne de signalisation concernée de ladite unité électronique active de réseau informatique local soit dans ledit premier état.

Selon des caractéristiques préférées de réalisation, pour des raisons de simplicité et de commodité de mise en oeuvre :
- ledit organe de coupure est un interrupteur radiofréquence ; ou bien
- ledit organe de coupure présente une position passante dans laquelle des bornes principales par lesquelles ledit organe de coupure est disposé en série sur la liaison entre ladite unité électronique active de traitement de signaux de télévision et la deuxième borne concernée, sont directement reliées l'une à l'autre ; et admet une position bloquée dans laquelle un filtre passe-haut est inséré entre lesdites bornes principales ; et optionnellement
- ledit filtre passe-haut élimine une bande de fréquences inférieures à 120 MHz ; et/ou
- ledit système comporte pour chaque dite deuxième borne, un symétriseur-asymétriseur dont une première borne principale est reliée à la deuxième borne concernée ; et ledit organe de coupure présente une première borne principale reliée à la seconde borne principale dudit symétriseur-asymétriseur, la seconde borne principale dudit organe de coupure étant reliée à ladite unité électronique active de gestion des signaux de télévision ; et/ou
- une borne d'entrée dudit organe de pilotage est reliée à un pôle positif d'une source de courant par l'intermédiaire d'une résistance de couplage et est reliée au pôle de masse de cette source de courant par l'intermédiaire d'un condensateur ; et optionnellement
- une diode est disposée entre une borne de commande dudit gestionnaire de présence de signaux de réseau informatique local et ladite borne d'entrée dudit organe de pilotage, ladite diode étant orientée dans le sens où elle laisse passer le courant de ladite borne d'entrée vers ladite borne de commande et où elle bloque le courant en sens inverse ; et/ou
- ledit système comporte en outre une troisième borne de connexion, adaptée à recevoir un câble de réseau de téléphonie ; et une unité électronique active de téléphonie, reliée à ladite troisième borne et à chaque dite deuxième borne de connexion.

L'exposé de l'invention sera maintenant poursuivi par la description d'exemples de réalisation, donnée ci-après à titre illustratif et non limitatif, en référence aux dessins annexés. Sur ceux-ci :
- la figure 1 est un schéma d'une installation de distribution de signaux comportant un système conforme à l'invention ;
- la figure 2 est un schéma indiquant la nature des signaux présents sur chacune des quatre paires de contacts des prises que comporte cette installation ;
- la figure 3 est une représentation schématique partielle du système conforme à l'invention ;
- la figure 4 est une représentation schématique d'un autre mode de réalisation du gestionnaire de présence de signaux de réseau informatique local que comporte le système conforme à l'invention ;
- la figure 5 est une représentation schématique d'encore un autre mode de réalisation de ce gestionnaire ;
- la figure 6 est une représentation plus détaillée de ce mode de réalisation du gestionnaire et d'un symétriseur-asymétriseur associé à ce gestionnaire ;
- la figure 7 est une représentation schématique partielle d'une variante du gestionnaire illustré sur la figure 6 ; et
- la figure 8 est un chronogramme expliquant le fonctionnement de la portion illustrée de cette variante.

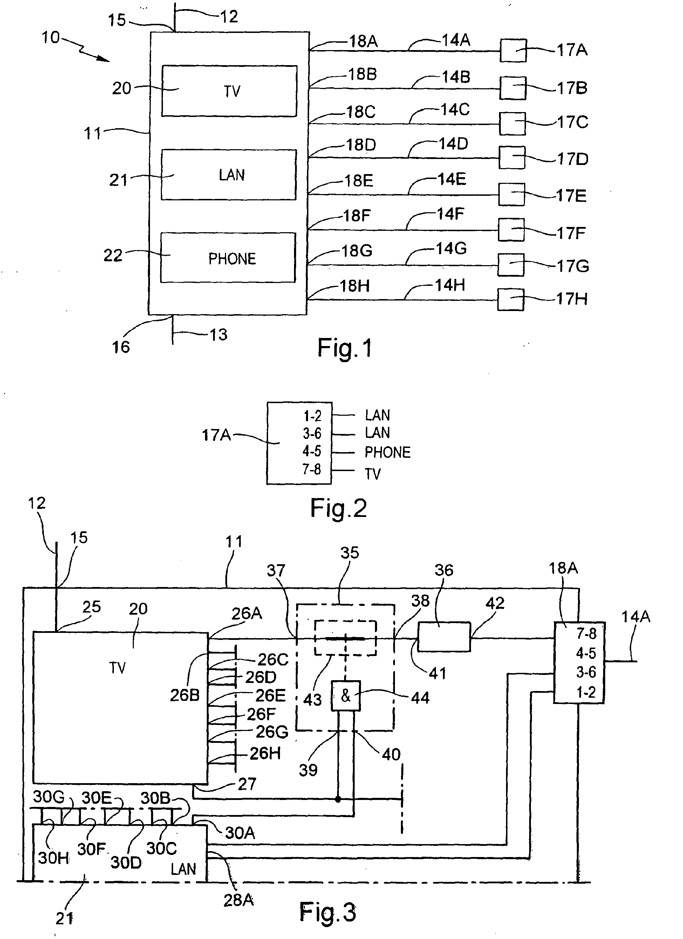

L'installation 10 de distribution de signaux illustrée sur la figure 1 comporte un système 11 auquel aboutissent un câble 12 de distribution de signaux de télévision, un câble 13 de raccordement au réseau téléphonique commuté public et huit câbles 14A à 14H de réseau informatique local.

L'installation 10 fait partie d'un bâtiment résidentiel ou tertiaire, avec ici le système 11 qui est disposé dans la gaine technique de ce bâtiment.

Le câble 12 est coaxial. Il est ici relié à un réseau de distribution de signaux de télévision présentant une voie de retour. Pour recevoir le câble 12, le système 11 présente une borne de connexion 15.

Le câble 13 comporte une paire de conducteurs reliée à un central de l'opérateur de téléphonie, lequel fournit une ligne sur cette paire. Pour recevoir le câble 13, le système 11 comporte une borne de connexion 16.

Les câbles 14A à 14H de réseau informatique local sont chacun du type conventionnel à quatre paires de conducteurs torsadées, ici en catégorie 6. Ces câbles cheminent chacun, dans le bâtiment auquel appartient l'installation 10, entre le système 11 et une respective des prises 17A à 17H, ici du type RJ 45 de catégorie 6.

Pour recevoir les câbles 14A à 14H, le système 11 présente pour chacun de ces câbles une borne respective de connexion 18A à 18H. Chacun des câbles 14A à 14H est prévu pour distribuer non seulement les signaux de réseau informatique local, mais aussi les signaux de téléphonie et les signaux de télévision.

La figure 2 montre quel est le câblage de la prise 17A, étant entendu que le câblage est le même pour les prises 17B à 17H ainsi que pour les bornes 18A à 18H.

On voit que la paire de contacts 1 et 2 est prévue pour les signaux de réseau informatique local LAN, qu'il en va de même pour la paire de contacts 3 et 6, que la paire de contacts 4 et 5 est prévue pour les signaux de téléphonie PHONE et que la paire de contacts 7 et 8 est prévue pour les signaux de télévision TV.

Les contacts pour les signaux de réseau informatique local et de téléphonie étant disposés de façon normalisée, l'utilisateur branche classiquement sur l'une des prises 17A à 17H un appareil de téléphonie ou un appareil de réseau informatique local, le cas échéant en utilisant un doubleur conventionnel pour brancher deux appareils de réseau informatique local ou pour brancher un tel appareil et un appareil téléphonique.

Pour raccorder un appareil de télévision, un adaptateur est branché sur l'une des prises 17A à 17H ou sur un doubleur lui-même branché à l'une des ces prises et un câble coaxial est branché entre l'adaptateur et l'appareil de télévision.

En variante, le câble coaxial et l'adaptateur sont réunis dans un même cordon.

Cet adaptateur comporte un symétriseur-asymétriseur (en anglais : balun) pour transformer le signal symétrique présent sur la paire de conducteurs torsadée aboutissant aux contacts 7 et 8 de l'une des prises 17A à 17H en un signal asymétrique pouvant être véhiculé par le câble coaxial, cette conversion étant réversible, c'est-à-dire que le symétriseur-asymétriseur est également capable de transformer un signal asymétrique présent sur le câble coaxial, et notamment un signal émis par un modem branché à ce câble, en un signal symétrique pouvant être véhiculé par la paire de conducteurs torsadée aboutissant aux contacts 7 et 8.

Pour que soient présent les signaux de télévision, les signaux de réseau informatique local et les signaux de téléphonie sur les paires de conducteurs torsadées des câbles 14A à 14H, le système 11 comporte une unité électronique active 20 de traitement de signaux de télévision, une unité électronique active 21 de réseau informatique local et une unité électronique active 22 de téléphonie, avec le câble 12 qui est relié à l'unité 20, avec le câble 13 qui est relié à l'unité 22 et avec chacune des bornes 18A à 18H qui est reliée à chacune des unités 20, 21 et 22.

Les unités électroniques 20, 21 et 22 sont actives en ce sens notamment que leur fonctionnement nécessite une alimentation en énergie électrique.

Comme on le voit sur la figure 3, l'unité 20 présente une borne de connexion 25 directement reliée à la borne 15, huit bornes de connexion 26A à 26H chacune reliée à une respective des bornes 18A à 18H, par l'intermédiaire, comme on le verra plus en détail ci-après, d'un gestionnaire de présence de signaux de réseau informatique local et d'un symétriseur-asymétriseur, et enfin, ici, une borne de signalisation 27 fournissant un signal logique qui est à un premier état si l'unité 20 est apte à prendre en charge une voie de retour sur le câble 12 et qui est sinon à un deuxième état.

Un répartiteur-amplificateur est prévu entre la borne 25 et les bornes 26A à 26H.

Lorsque l'unité 20 est prévue pour prendre en charge une voie de retour, le répartiteur-amplificateur est bidirectionnel et est associé à des filtres appropriés.

L'unité 21 présente pour chacune des bornes 18A à 18H, une borne respective de connexion dont seule la borne 28A est visible sur la figure 3, chacune des bornes telle que 28A étant directement reliée à la borne telle que 18A par une première paire de conducteurs connectée à la paire de contacts 1 et 2 de cette borne et par une deuxième paire de conducteurs connectée à la paire de contacts 3 et 6 de cette borne.

L'unité 21 présente également huit bornes de signalisation 30A à 30H correspondant chacune à une respective des bornes 18A à 18H, chacune des bornes 30A à 30H fournissant un signal logique qui est à un premier état en présence de signaux de réseau informatique local sur la borne 18A à 18H correspondante et à un deuxième état en l'absence de tels signaux.

D'une façon générale, l'unité 21 correspond à un switch ethernet 10/100 base T, construit autour d'un circuit intégré spécialisé BCM53 28MA1KQM de la Société Broadcom ®.

Ce circuit intégré présente des sorties LED 1A# à LED 8A# prévues pour alimenter ou non des diodes électroluminescentes pour indiquer si une liaison avec l'équipement informatique connecté sur le port correspondant est réalisé ou non.

Ces sorties du circuit intégré sont directement connectées au bornes 30A à 30H de l'unité 21.

On va maintenant décrire en détails le circuit existant entre la borne 18A et les unités 20 et 21, étant entendu que la description effectuée ci-après pour la borne 18A vaut également pour chacune des bornes 18B à 18H, à condition de remplacer la référence 26A et la référence 30A respectivement par le chiffre 26 et par le chiffre 30 suivi de la même lettre que celle qui suit le chiffre 18.

Le système 11 comporte pour la borne 18A un gestionnaire 35 de présence de signaux de réseau informatique local et un symétriseur-asymétriseur 36.

Le gestionnaire 35 présente deux bornes principales 37 et 38 et deux bornes de commande 39 et 40.

Le symétriseur-asymétriseur 36 présente deux bornes principales 41 et 42.

D'une façon générale, le gestionnaire 35, par ses bornes 37 et 38, et le symétriseur-asymétriseur 36 sont disposés en série entre la borne 26A et la paire de contacts 7 et 8 de la borne 18A.

Plus précisément, la borne 37 est directement reliée à la borne 26A, la borne 38 est directement reliée à la borne 41 (côté asymétrique) du symétriseur-asymétriseur 36 tandis que la borne 42 (côté symétrique) de ce dernier est reliée à la paire de contacts 7 et 8 de la borne 18A.

La borne de commande 39 est reliée à la borne 27 de l'unité 20 tandis que la borne de commande 40 est reliée à la borne 30A de l'unité 21.

Le gestionnaire 35 comporte un organe de coupure 43 disposé en série entre les bornes 37 et 38 et un organe 44 de pilotage de l'organe 43, l'organe 44 étant relié à chacune des bornes 39 et 40.

Dans la position de l'organe 43 illustrée sur la figure 3, l'organe 43 est passant, c'est-à-dire qu'il relie les bornes 37 et 38. Dans l'autre position de l'organe 43, celui-ci est bloqué, c'est-à-dire qu'il isole les bornes 37 et 38 l'une de l'autre.

L'organe de pilotage 44 comporte un organe logique du type cellule "ET".

Lorsqu'au moins l'un des deux signaux logiques présents aux bornes 39 et 40 est à l'état 0, l'organe 44 fait prendre à l'organe 43 la position passante illustrée sur la figure 3.

Lorsque les deux signaux présents aux bornes 39 et 40 sont à l'état 1, l'organe 44 fait prendre à l'organe 43 la position bloquée (position autre que celle illustrée sur la figure 3).

Dans le mode de réalisation illustré sur la figure 3, le signal présent à la borne de connexion 27 de l'unité 20, et donc à la borne 39 du gestionnaire 35, est à l'état 0 si l'unité 20 n'est pas apte à prendre en charge une voie de retour tandis que si cette unité y est apte, le signal est à l'état 1.

Ainsi, lorsque l'unité 20 n'est pas apte à prendre en charge une voie de retour, l'organe de coupure 43 est toujours dans sa position passante (le signal présent à la borne 27 et donc à la borne 39, est toujours à l'état 0).

Lorsque l'unité 20 est apte à prendre en charge une voie de retour (signal présent à la borne 27, et donc à la borne 39, à l'état 1), l'organe 43 est à l'état passant en l'absence de signaux de réseau informatique local à la borne 18A (signal présent à la borne 30A, et donc à la borne 40, à l'état 0) tandis que l'organe 43 est à l'état bloqué en présence de signaux de réseau informatique local sur la borne 18A (signal présent sur la borne 30A, et donc sur la borne 40, à l'état 1).

Ainsi, en présence de signaux de réseau informatique local sur la borne de connexion 18A, le gestionnaire 35 isole l'unité 20 de la borne 18A de sorte que le bruit induit par les signaux de réseau informatique local sur la paire de conducteurs véhiculant les signaux de télévision n'est communiqué ni au câble 12 ni d'ailleurs aux câbles 14B à 14H.

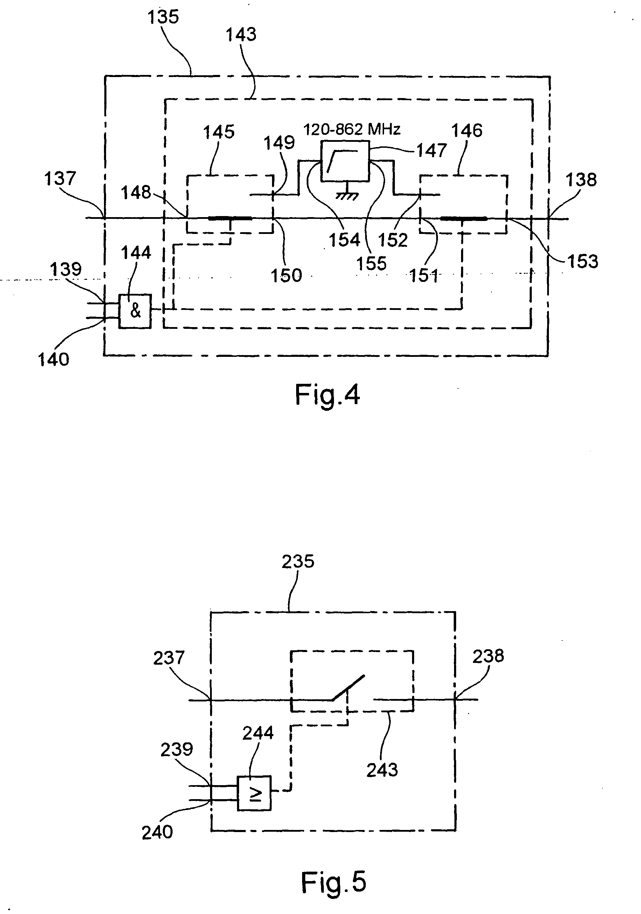

Le gestionnaire 135 illustré sur la figure 4 est identique au gestionnaire 35, si ce n'est que l'organe de coupure 43 est remplacé par un organe de coupure 143.

D'une façon générale, on a employé pour les éléments similaires les mêmes références que pour le gestionnaire 35, mais additionnées du chiffre 100.

L'organe de coupure 143 présente une position passante dans laquelle les bornes principales 137 et 138 sont directement reliées l'une à l'autre et une position bloquée dans laquelle un filtre passe-haut est inséré entre les bornes 137 et 138, de sorte qu'entre les bornes 137 et 138 il se produit une élimination de la bande de fréquences dans laquelle se trouve la voie de retour.

Plus précisément, l'organe de coupure 145 comporte deux organes d'inversion 145 et 146 et un filtre passe-haut 147.

L'organe d'inversion 145 présente trois bornes 148, 149 et 150. Il admet une première position, illustrée sur la figure 4, où les bornes 148 et 150 sont reliées l'une à l'autre tandis que les bornes 148 et 149 sont isolées l'une de l'autre ; et admet une deuxième position dans laquelle les bornes 148 et 149 sont reliées l'une à l'autre tandis que les bornes 148 et 150 sont isolées l'une de l'autre.

De même, l'organe d'inversion 146 présente trois bornes 151, 152 et 153. Il admet une première position, illustrée sur la figure 4, où les bornes 151 et 153 sont reliées l'une à l'autre tandis que les bornes 152 et 153 sont isolées l'une de l'autre ; et admet une deuxième position dans laquelle les bornes 152 et 153 sont reliées l'une à l'autre tandis que les bornes 151 et 153 sont isolées l'une de l'autre.

Le filtre passe-haut 147 présente deux bornes 154 et 155. Il élimine les fréquences inférieures à 120 MHz tandis qu'il laisse passer les fréquences comprises entre 120 et 862 MHz, soit la bande de fréquences dans laquelle se trouve la majorité des canaux de diffusion de la télévision.

La borne principale 137 du gestionnaire 135 est directement reliée à la borne 148 de l'organe d'inversion 145.

La borne 149 de l'organe 145 est directement reliée à la borne 154 du filtre 147.

La borne 150 de l'organe 145 est directement reliée à la borne 151 de l'organe 146.

La borne 155 du filtre 147 est directement reliée à la borne 152 de l'organe 146.

La borne 153 de l'organe 146 est directement reliée à la borne principale 138 de l'organe 135.

Lorsque l'organe de coupure 143 est dans la position illustrée sur la figure 4, il existe une liaison directe entre les bornes principales 137 et 138.

Lorsque chacun des deux organes d'inversion 145 et 146 est dans la position autre que celle illustrée sur la figure 4, le filtre 147 est interposé entre les bornes 137 et 138.

Ainsi, en présence de signaux de réseau informatique local, le gestionnaire 135 ne bloque pas la totalité des signaux de télévision, mais seulement la bande de fréquences qui se recoupe de façon significative avec les signaux de réseau informatique local, de sorte que le reste des signaux, où se trouve en principe la majorité des canaux où sont diffusées les chaînes de télévision, reste disponible à la prise 18A.

Le gestionnaire 235 illustré sur la figure 5 est identique au gestionnaire 35, si ce n'est que l'organe de pilotage 46 est remplacé par un organe de pilotage 244 de type différent.

D'une façon générale, on a gardé pour les éléments similaires les mêmes références numériques que pour le gestionnaire 35, mais additionnées du chiffre 200.

Alors que l'organe de pilotage 44 comporte une cellule logique de type "ET", l'organe de pilotage 244 présente une cellule de type "OU", l'état des signaux logiques mentionné ci-dessus pour le gestionnaire 35 étant inversé.

Ainsi, lorsque le signal logique présent à la borne 239 (signal fourni par la borne 27 de l'unité 20) est à l'état 1 (unité 20 non apte à prendre en charge une voie de retour), l'organe de coupure 243 est en position passante, quel que soit l'état du signal présent à la borne 240 (signal fourni par la borne 30A de l'unité 21).

Lorsque le signal présent à la borne 239 est à l'état 0 (unité 20 apte à prendre en charge une voie de retour), si le signal présent à la borne 240 est à l'état 0 (présence de signaux de réseau informatique local), l'organe de coupure 243 est à l'état bloqué tandis que si le signal présent à la borne 240 est à l'état 1 (absence de signaux de réseau informatique local), l'organe de coupure 243 est à l'état passant.

Dans un mode de réalisation non illustré du gestionnaire de présence de signaux de réseau informatique local, l'organe de coupure en tout ou rien 243 est remplacé par un organe de coupure avec filtre passe-haut tel que l'organe 143.

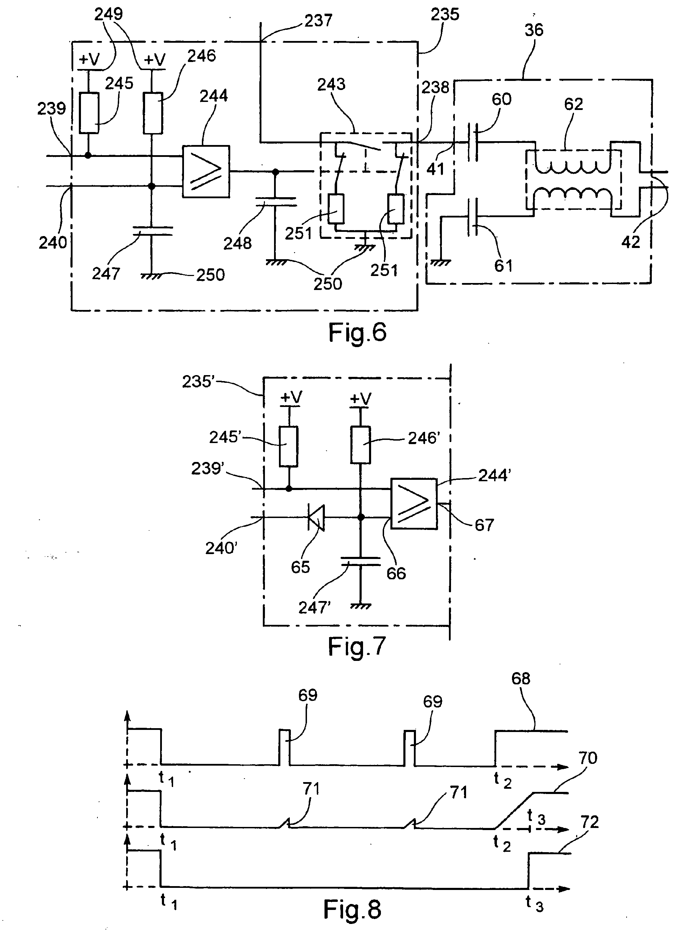

On va maintenant décrire plus en détail le gestionnaire 235, à l'appui de la figure 6.

En outre des éléments illustrés sur la figure 5, le gestionnaire 235 comporte deux résistances de couplage 245 et 246 ainsi que deux condensateurs 247 et 248.

L'un des points de raccordement de la résistance 245 est relié au pôle positif 249 d'une source de courant tandis que l'autre point de raccordement de la résistance 245 est relié au conducteur opérant la liaison directe entre l'organe de pilotage 244 et la borne 239.

L'un des points de raccordement de la résistance 246 est relié au pôle 249 tandis que l'autre point de raccordement de cette résistance est relié au conducteur opérant la liaison directe entre la borne 240 et l'organe de pilotage 244.

L'un des points de raccordement du condensateur 247 est relié à ce même conducteur opérant la liaison directe entre la borne 240 et l'organe 244 tandis que l'autre point de raccordement du condensateur 247 est relié au pôle de masse 250 de la source de courant continu à laquelle appartient le pôle 249.

L'un des points de raccordement du condensateur 248 est relié à un conducteur opérant une liaison directe entre les organes 244 et 243 tandis que l'autre point de raccordement du condensateur 248 est relié au pôle de masse 250.

Le signal fourni par la borne 27 de l'unité 20 est à l'état 0 lorsque cette borne est portée au pôle de masse 250 tandis qu'il est à l'état 1 lorsque cette borne est en l'air.

Ainsi, lorsque le signal fourni par la borne 27 est à l'état 0, c'est le potentiel du pôle 250 qui est présent à la borne de l'organe 244 reliée à la borne 239 tandis que quand le signal fourni par la borne 27 est à l'état 1, c'est au potentiel du pôle positif 249 qu'est portée cette borne de l'organe 244.

Le signal fourni par la borne 30A de l'unité logique 21 est soit au potentiel du pôle 249 (état 1), soit au potentiel du pôle 250 (état 0).

Bien entendu, la borne 240 et la borne de l'organe 244 reliée à la borne 240 sont portées au même potentiel que la borne 30A.

Si la borne 240 est en l'air, ce qui se produit si l'unité 21 est absente du système 11, le condensateur 247 se charge par l'intermédiaire de la résistance 246, de sorte que la borne correspondante de l'organe 244 est au potentiel du pôle 249. En conséquence, l'organe de coupure 243 est à l'état passant.

Le condensateur 248 sert à filtrer les transitoires.

L'organe de coupure 243 est un interrupteur radiofréquence capable d'offrir, en position bloquée, dans la bande de fréquences des signaux de télévision, un affaiblissement entre ses bornes principales (bornes reliées respectivement à la borne 237 et à la borne 238) le niveau d'isolation requis, des résistances 251 étant prévues pour assurer l'adaptation d'impédance dans la position bloquée.

Le symétriseur-asymétriseur 36 comporte classiquement deux condensateurs 60 et 61 et un transformateur 62.

On notera qu'il est intéressant que le gestionnaire de présence de signaux de réseau informatique local 35, 135 ou 235 soit disposé, par ses bornes principales, entre l'unité 20 et le symétriseur-asymétriseur 36, car l'organe de coupure 43, 143 ou 243 agit sur un signal asymétrique (il faudrait deux organes tels que 243 par exemple pour agir sur un signal symétrique).

La variante 235' de l'organe 235 illustrée sur la figure 7 est identique à cette dernière si ce n'est qu'elle comporte en outre une diode 65.

D'une façon générale, on a employé les mêmes références numériques que pour le gestionnaire 235, mais affectées d'un exposant '.

La diode 65 est disposée entre la borne 240' et les points de raccordement de la résistance 246' et du condensateur 247' par lesquels ces derniers sont reliés l'un à l'autre et au point de raccordement 66 de l'organe 244'.

La diode 65 est disposée dans le sens où elle autorise une circulation de courant du condensateur 247' vers la borne 240 tandis qu'elle interdit la circulation de courant en sens inverse.

On va maintenant expliquer l'intérêt de la diode 65 à l'appui de la figure 8.

Cette figure est un chronogramme illustrant l'état des signaux présents respectivement à la borne 240', à la borne 66 et à la borne de sortie 67 de l'organe 244', une échelle de temps commune étant portée en abscisses tandis qu'en ordonnées est portée la tension à ces bornes (différence de potentiel vis-à-vis du pôle de masse 250).

La courbe 68 illustre le signal présent à la borne 240'.

Dans l'exemple illustré, le circuit intégré susmentionné compris dans l'unité 21 détecte une présence de signaux de réseau informatique local entre les instants t1 et t2.

Le signal présent à la borne 30A et donc à la borne 240' est à l'état 1 avant l'instant t1 et après l'instant t2 tandis qu'il est à l'état 0 entre les instants t1 et t2.

Il se trouve cependant que le signal fourni par le circuit intégré susmentionné en présence de signaux de réseau informatique local ne reste pas en permanence au potentiel du pôle de masse 250 mais passe périodiquement au potentiel du pôle positif 249 par de courtes pulsations 69 d'une durée de l'ordre de 10 microsecondes.

Lorsque, à l'instant t1, le signal présent à borne 240' est passé à l'état 0 (potentiel de la borne 240' devenant celui du pôle de masse 250), le condensateur 247' se décharge instantanément au travers de la diode 65.

Lorsque, à l'occasion d'une pulsation 69, le potentiel de la borne 240' devient celui du pôle 249, la diode 65 empêche que le condensateur 247 se charge directement par l'intermédiaire de la borne 240', cette charge s'effectuant en fait avec le courant passant au travers de la résistance 246', de sorte que la montée en tension à la borne 66 n'est pas instantanée mais s'effectue de façon très progressive.

La courbe 70 de la figure 8 montre comment évolue la tension à la borne 66. On voit que quand les pulsations 69 se produisent, les variations 71 de tension à la borne 66 sont très faibles et ne sont donc pas prises en compte par l'organe 244', lequel ne change d'état que quand le potentiel du pôle 249 est atteint.

Après l'instant t2, la tension à la borne 66 monte progressivement au fur et à mesure que le condensateur 247' se charge et ce n'est qu'à l'instant t3 que cette borne parvient au potentiel du pôle 249.

La courbe 72 de la figure 8 montre la tension à la borne 67, cette tension étant à l'état 0 entre les instants t1 et t3, les pulsations 69 ne perturbant donc pas l'organe de pilotage 244'.

Il va de soi que le système 11, s'il constitue un ensemble fonctionnel, ne constitue pas nécessaire un élément matériel monobloc.

A ce jour, dans un mode de réalisation préféré, le système 11 comporte un concentrateur de câblage se présentant sous la forme d'une carte électronique munie d'un connecteur pour chacune des unités 20, 21 et 22, lesquelles se présentent chacune sous la forme d'un boîtier séparé.

Dans une variante non illustrée, le gestionnaire de présence de signaux de réseau informatique local ne prend en compte aucun critère relatif à l'unité 20 de traitement des signaux de télévision : il n'existe aucune borne telle que les bornes 39, 139, 239 ou 239', l'organe de pilotage tel que 44, 144, 244 ou 244' faisant prendre à l'organe de coupure tel que 43, 143 ou 243 la position bloquée dès lors qu'il y a présence de signaux de réseau informatique local et faisant prendre à l'organe de coupure la position passante dès lors qu'il y a absence de tels signaux. L'unité de traitement de signaux de télévision telle que 20 n'est alors pas munie d'une borne de connexion telle que 27.

Dans une autre variante non représentée, le système 11 ne prend pas en charge les signaux de téléphonie : il n'y a pas d'unité active telle que 22, pas de borne telle que 16 et les paires de contacts 4 et 5 des bornes telles que 18A à 18H sont libres ou affectées à un autre usage.

De nombreuses autres variantes sont possibles en fonction des circonstances, et on rappelle à cet égard que l'invention ne se limite pas aux exemples décrits et représentés.

## Revendications

1. Système de distribution de signaux de télévision et de signaux de réseau informatique local, **caractérisé en ce qu'**il comporte :
- une première borne de connexion (15), adaptée à recevoir un câble (12) de distribution de signaux de télévision ;
- plusieurs deuxièmes bornes de connexion (18A-18H), chacune adaptée à recevoir un câble de réseau informatique local (14A-14H) ;
- une unité électronique active (20) de traitement de signaux de télévision, reliée à ladite première borne de connexion (15) et à chaque dite deuxième borne de connexion (18A-18H) ;
- une unité électronique active (21) de réseau informatique local, reliée à chaque dite deuxième borne de connexion (18A-18H) et comportant, pour chaque dite deuxième borne de connexion (18A-18H), une borne de signalisation (30A-30H) fournissant un signal logique qui est à un premier état en présence de signaux de réseau informatique local sur la deuxième borne (18A-18H) concernée et à un deuxième état en l'absence de tels signaux ; et
- pour chaque dite deuxième borne, un gestionnaire (35 ; 135 ; 235 ; 235') de présence de signaux de réseau informatique local, comportant un organe (43 ; 143 ; 243) de coupure disposé en série sur la liaison entre ladite unité électronique active (20) de traitement de signaux de télévision et cette deuxième borne (18A-18H), admettant une position bloquée et une position passante ; et comportant un organe de pilotage (44 ; 144 ; 244 ; 244') dudit organe de coupure (43 ; 143 ; 243) relié à la borne de signalisation (30A-30H) concernée de ladite unité électronique active (21) de réseau informatique local, ledit organe de pilotage (44 ; 144 ; 244 ; 244') faisant prendre audit organe de coupure (43 ; 143 ; 243) ladite position passante sauf dans le cas où une condition prédéterminée est satisfaite, auquel cas l'organe de pilotage (44 ; 144 ; 244 ; 244') fait prendre à l'organe de coupure (43 ; 143 ; 243) la position bloquée, ladite condition prédéterminée comportant le critère que ledit signal logique fourni par ladite borne de signalisation (30A-30H) concernée de ladite unité électronique active (21) de réseau informatique local soit dans ledit premier état.

2. Système selon la revendication 1, **caractérisé en ce que** ladite condition prédéterminée est que ledit signal logique fourni par ladite borne de signalisation (30-30H) concernée de ladite unité électronique active (21) de réseau informatique local soit dans ledit premier état.

3. Système selon la revendication 1, **caractérisé en ce que** ladite unité électronique active (20) de traitement de signaux de télévision comporte une borne de signalisation (27) fournissant un signal logique qui est à un premier état si ladite unité active (20) de traitement des signaux de télévision est apte à prendre en charge une voie de retour sur ledit câble (12) de distribution de signaux de télévision et qui est sinon à un deuxième état ; et **en ce que** ledit organe de pilotage (44 ; 144 ; 244 ; 244') dudit organe de coupure (43 ; 143 ; 243) est relié à ladite borne de signalisation (27) de ladite unité électronique active (20) de traitement de signaux de télévision, ladite condition prédéterminée étant que ledit signal logique fourni par la borne de signalisation (27) de l'unité électronique active (20) de traitement de signaux de télévision soit dans ledit premier état et que ledit signal logique fourni par la borne de signalisation (30A-30H) concernée de ladite unité électronique active (21) de réseau informatique local soit dans ledit premier état.

4. Système selon l'une quelconque des revendications 1 à 3, **caractérisé en ce que** ledit organe de coupure (43 ; 243) est un interrupteur radiofréquence.

5. Système selon l'une quelconque des revendications 1 à 3, **caractérisé en ce que** ledit organe de coupure (143) présente une position passante dans laquelle des bornes principales (137, 138) par lesquelles ledit organe de coupure est disposé en série sur la liaison entre ladite unité électronique active (20) de traitement de signaux de télévision et la deuxième borne (18A-18H) concernée, sont directement reliées l'une à l'autre ; et admet une position bloquée dans laquelle un filtre passe-haut (147) est inséré entre lesdites bornes principales (137, 138).

6. Système selon la revendication 5, **caractérisé en ce que** ledit filtre passe-haut (147) élimine une bande de fréquences inférieures à 120 MHz.

7. Système selon l'une quelconque des revendications 1 à 6, **caractérisé en ce qu'**il comporte pour chaque dite deuxième borne (18A-18H), un symétriseur-asymétriseur (36) dont une première borne principale (42) est reliée à la deuxième borne (18A-18B) concernée ; et **en ce que** ledit organe de coupure (43 ; 143 ; 243) présente une première borne principale (38) reliée à la seconde borne principale (41) dudit symétriseur-asymétriseur (36), la seconde borne principale (37 ; 137 ; 237) dudit organe de coupure (43 ; 143 ; 243) étant reliée à ladite unité électronique active (20) de gestion des signaux de télévision.

8. Système selon l'une quelconque des revendications 1 à 7, **caractérisé en ce qu'**une borne d'entrée (66) dudit organe de pilotage (244 ; 244') est reliée à un pôle positif (249) d'une source de courant par l'intermédiaire d'une résistance de couplage (246) et est reliée au pôle de masse (250) de cette source de courant par l'intermédiaire d'un condensateur (247 ; 247').

9. Système selon la revendication 8, **caractérisé en ce qu'**une diode (65) est disposée entre une borne de commande (240') dudit gestionnaire de présence de signaux de réseau informatique local et ladite borne d'entrée (66) dudit organe de pilotage (244'), ladite diode (65) étant orientée dans le sens où elle laisse passer le courant de ladite borne d'entrée (66) vers ladite borne de commande (240') et où elle bloque le courant en sens inverse.

10. Système selon la revendication 9, **caractérisé en ce qu'**il comporte en outre une troisième borne de connexion (16), adaptée à recevoir un câble (13) de réseau de téléphonie ; et une unité électronique active (22) de téléphonie, reliée à ladite troisième borne (16) et à chaque dite deuxième borne de connexion (18A-18H).

## Claims

1. A system for the distribution of television signals and local area network signals, **characterised in that** it comprises:
- a first connection terminal (15) adapted to receive a television signal distribution cable (12);
- a plurality of second connection terminals (18A-18H) each adapted to receive a local area network cable (14A-14H);
- an active electronic television signal processing unit (20) connected to said first connection terminal (15) and to each said second connection terminal (18A-18H);
- an active electronic local area network unit (21) connected to each said second connection terminal (18A-18H) and comprising for each said second connection terminal (18A-18H) a signalling terminal (30A-30H) supplying a logic signal which is in a first state in the presence of local area network signals on the second terminal (18A-18H) in question and a second state in the absence of such signals; and
- for each said second terminal a local area network signal presence manager (35; 135; 235; 235') comprising a cut-off member (43; 143; 243) disposed in series on the connection between said active electronic television signal processing unit (20) and said second terminal (18A-18H), allowing a blocked position and a pass position; and comprising a pilot control member (44; 144; 244; 244') for said cut-off member (43; 143; 243) connected to the signalling terminal (30A-30H) in question of said active electronic local area network unit (21), said pilot control member (44; 144; 244;244') causing said cut-off member (43; 143; 243) to assume said pass position except in the case where a predetermined condition is satisfied, in which case the pilot control member (44; 144; 244; 244') causes the cut-off member (43; 143; 243) to assume the blocked position, said predetermined condition comprising the criterion that said logic signal supplied by said signalling terminal (30A-30H) in question of said active electronic local area network unit (21) is in said first state.

2. A system according to claim 1 **characterised in that** said predetermined condition is that said logic signal supplied by said signalling terminal (30A-30H) in question of said active electronic local area network unit (21) is in said first state.

3. A system according to claim 1 **characterised in that** said active electronic television signal processing unit (20) comprises a signalling terminal (27) supplying a logic signal which is in a first state if said active television signal processing unit (20) is capable of taking charge of a return path on said television signal distribution cable (12) and which is otherwise in a second state; and that said pilot control member (44; 144; 244; 244') of said cut-off member (43; 143; 243) is connected to said signalling terminal (27) of said active electronic television signal processing unit (20), said predetermined condition being that said logic signal supplied by the signalling terminal (27) of the active electronic television signal processing unit (20) is in said first state and that said logic signal supplied by the signalling terminal (30A-30H) in question of said active electronic local area network unit (21) is in said first state.

4. A system according to any one of claims 1 to 3 **characterised in that** said cut-off member (43; 243) is a radio-frequency cut-off switch.

5. A system according to any one of claims 1 to 3 **characterised in that** said cut-off member (143) has a pass position in which principal terminals (137, 138) by which said cut-off member is disposed in series on the connection between said active electronic television signal processing unit (20) and the second terminal (18A-18H) in question are directly connected to each other; and allows a blocked position in which a high-pass filter (147) is inserted between said principal terminals (137, 138).

6. A system according to claim 5 **characterised in that** said high-pass filter (147) eliminates a band of frequencies lower than 120 MHz.

7. A system according to any one of claims 1 to 6 **characterised in that** for each said second terminal (18A-18H) it comprises a balun (36) of which a first principal terminal (42) is connected to the second terminal (18A-18B) in question; and that said cut-off member (43; 143; 243) has a first principal terminal (38) connected to the second principal terminal (41) of said balun (36), the second principal terminal (37; 137; 237) of said cut-off member (43; 143; 243) being connected to said active electronic television signal management unit (20).

8. A system according to any one of claims 1 to 7 **characterised in that** an input terminal (66) of said pilot control member (244; 244') is connected to a positive pole (249) of a current source by way of a coupling resistor (246) and is connected to the ground pole (250) of said current source by way of a capacitor (247; 247').

9. A system according to claim 8 **characterised in that** a diode (65) is disposed between a control terminal (240') of said local area network signal presence manager and said input terminal (66) of said pilot control member (244'), said diode (65) being oriented in the direction in which it passes the current from said input terminal (66) to said control terminal (240') and in which it blocks the current in the opposite direction.

10. A system according to claim 9 **characterised in that** it further comprises a third connection terminal (16) adapted to receive a telephony network cable (13); and an active electronic telephony unit (22) connected to said third terminal (16) and to each said second connection terminal (18A-18H).

## Patentansprüche

1. System zur Verteilung von Fernsehsignalen und Lokalnetz-Signalen,
**dadurch gekennzeichnet, dass** es umfasst:
- eine erste Klemme (15), die ein Kabel (12) zur Verteilung von Fernsehsignalen aufzunehmen vermag;
- mehrere zweite Klemmen (18A-18H), die jeweils ein Lokalnetz-Kabel (14A-14H) aufzunehmen vermögen;
- eine aktive elektronische Einheit (20) zur Femsehsignalverarbeitung, die mit der ersten Klemme (15) und mit jeder der zweiten Klemmen (18A-18H) verbunden ist;
- eine aktive elektronische Lokalnetz-Einheit (21), die mit jeder der zweiten Klemmen (18A-18H) verbunden ist und für jede dieser zweiten Klemmen (18A-18H) eine Signalisierungsklemme (30A-30H) aufweist, die ein logisches Signal liefert, das einen ersten Zustand aufweist, wenn an der betreffenden zweiten Klemme (18A-18H) Lokalnetz-Signale auftreten, und einen zweiten Zustand, wenn derartige Signale fehlen; und
- für jede der zweiten Klemmen ein Programm (35; 135; 235; 235') zur Verarbeitung der Lokalnetz-Signalpräsenz, mit einem Schaltorgan (43; 143; 243), das auf der Verbindung zwischen der aktiven elektronischen Fernsehsignalverarbeitungseinheit (20) und der zweiten Klemme (18A-18H) in Reihe angeordnet ist, wobei es eine Sperrstellung und eine Durchlassstellung aufweist; und mit einem Organ (44; 144; 244; 244') zum Steuern des Schaltorgans (43; 143; 243), das mit der betreffenden Signalisierungsklemme (30A-30H) der aktiven elektronischen Lokalnetz-Einheit (21) verbunden ist, wobei das Steuerorgan (44; 144; 244; 244') das Schaltorgan (43; 143; 243) zur Einnahme der Durchlassstellung veranlasst, außer in dem Fall, wenn eine vorbestimmte Bedingung erfüllt ist, in dem das Steuerorgan (44; 144; 244; 244') das Schaltorgan (43; 143; 243) zur Einnahme der SperrStellung veranlasst, wobei die vorbestimmte Bedingung das Kriterium umfasst, dass sich das von der betreffenden Signalisierungsklemme (30A-34H) abgegebene logische Signal der aktiven elektronischen Lokalnetz-Einheit (21) im ersten Zustand befindet.

2. System nach Anspruch 1,
**dadurch gekennzeichnet, dass** die vorbestimmte Bedingung darin besteht, dass sich das von der betreffenden Signalisierungsklemme (30A-30H) der aktiven elektronischen Lokalnetz-Einheit (21) gelieferte Signal im ersten Zustand befindet.

3. System nach Anspruch
**dadurch gekennzeichnet, dass** die aktive elektronische Fernsehsignalverarbeitungseinheit (20) eine Signalisierungsklemme (27) aufweist, die ein logisches Signal liefert, das sich in einem ersten Zustand befindet, wenn die aktive Femsehsignalverarbeitungseinheit (20) einen Rückweg auf dem Fernsehsignalverteilerkabel (12) zu übernehmen vermag, und sich anderenfalls in einem zweiten Zustand befindet; und dass das Steuerorgan (44; 144; 244; 244') des Schaltorgans (43; 143; 243) mit der Signalisierungsklemme (27) der aktiven elektronischen Fernsehsignalverarbeitungseinheit (20) verbunden ist, wobei die vorbestimmte Bedingung darin besteht, dass sich das von der Signalisierungsklemme (27) der aktiven elektronischen Femsehsignalverarbeitungseinheit (20) abgegebene logische Signal im ersten Zustand befindet, und dass sich das von der betreffenden Signalisierungsklemme (30A-30H) der aktiven elektronischen Lokalnetz-Einheit (21) abgegebene logische Signal im ersten Zustand befindet.

4. System nach einem der Ansprüche 1 bis 3,
**dadurch gekennzeichnet, dass** das Schaltorgan (43; 243) ein Hochfrequenz-Schaiter ist.

5. System nach einem der Ansprüche 1 bis 3,
**dadurch gekennzeichnet, dass** das Schaltorgan (143) eine Durchlassstellung auf weist, in der die Hauptklemmen (137, 138), durch die das Schaltorgan auf der Verbindung zwischen der aktiven elektronischen Fernsehsignalverarbeitungseinheit (20) und der betreffenden zweiten Klemme (18A-18H) in Reihe angeordnet ist, direkt miteinander verbunden sind; und eine Sperrstellung aufweist, In der ein Hochpassfilter (147) zwischen die Hauptklemmen (137, 138) eingefügt ist.

6. System nach Anspruch 5,
**dadurch gekennzeichnet, dass** der Hochpassfilter (147) einen Bereich mit Frequenzen von unter 120 MHz sperrt.

7. System nach einem der Ansprüche 1 bis 6,
**dadurch gekennzeichnet, dass** es für jede der zweiten Klemmen (18A-18H) einen Balun (36) aufweist, dessen erste Hauptklemme (42) mit der betreffenden zweiten Klemme (18A-18H) verbunden ist; und dass das Schaltorgan (43; 143; 243) eine mit der zweiten Hauptklemme (41) des Baluns (36) verbundene erste Hauptklemme (38) aufweist, wobei die zweite Hauptklemme (37; 137; 237) des Schaltorgans (43; 143; 243) mit der aktiven elektronischen Fernsehsignalverarbeitungseinheit (20) verbunden ist.

8. System nach einem der Ansprüche 1 bis 7,
**dadurch gekennzeichnet, dass** eine Eingangsklemme (66) des Steuerorgans (244; 244') über einen Kopplungswiderstand (246) mit einem Pluspol (249) einer Stromquelle verbunden ist und über einen Kondensator (247; 247') mit einem Massepol (250) der Stromquelle verbunden ist.

9. System nach Anspruch 8,
**dadurch gekennzeichnet, dass** eine Diode (65) zwischen einer Steuerklemme (240') des Lokalnetz-Signalpräsenz-Verarbeitungsprogramms und der Eingangsklemme (66) des Steuerorgans (244') angeordnet ist, wobei die Diode (65) in der Richtung ausgerichtet ist, in der sie den Strom der Eingangsklemme (66) zur Steuerklemme (240') durchlässt und in der sie den Strom in umgekehrter Richtung sperrt.

10. System nach Anspruch 9,
**dadurch gekennzeichnet, dass** es ferner eine dritte Klemme (16) umfasst, die ein Telefonie-Kabel (13) aufzunehmen vermag; und eine aktive elektronische Telefonie-Einheit (22), die mit der dritten Klemme (16) und mit jeder der zweiten Klemmen (18A-18H) verbunden ist.
